# EUROPEAN PATENT SPECIFICATION

(11) **EP 0 706 279 B1**
(45) Date of publication and mention of the grant of the patent: **02.07.2003**
(21) Application number: 95202292.9
(22) Date of filing: 24.08.1995
(51) Int. Cl.: H04M 11/06, H04M 3/54

(54) **Modem system for teleworkers**
Modemsystem für Teleheimarbeiter
Système de modem pour travailleurs à distance

(30) Priority: 09.09.1994 NL 9401474
(43) Date of publication of application: 10.04.1996
(73) Proprietor: Koninklijke KPN N.V., 9726 AE Groningen (NL)
(72) Inventor: Mens, Björn Sighurdh, NL-7916 TN Elim (NL)

(56) References cited:
- EP-A- 0 498 593
- DE-A- 3 336 838
- US-A- 4 878 240
- US-A- 5 289 582

## Description

### A. BACKGROUND OF THE INVENTION

The invention relates to a modem which is suitable for simultaneous transmission of data signals via the modem's data port and speech signals via the modem's speech port to and from a first subscriber port of a telephone network via the modem's network port.

For some time modems have been commercially available with which it is possible to exchange data and speech simultaneously via the same telephone connection. As a result it is possible to exchange data, such as text, tables and graphs, during a telephone call or, conversely, to explain data verbally while they are being exchanged.

The mentioned modems are known as SVD (Simultaneous Voice and Data) modems, e.g. from EP0674420-A1 and EP0676886-A3.

A drawback is that the speech communication is limited to telephone terminals which can be connected to the modems at either end. A further drawback is that both parties are unobtainable for calls from the telephone network while their network connection is being used by the modem, but they also are unable to make calls themselves to others. This situation is inconvenient, particularly in the case of teleworking, where work is carried out at home for an organization using the LAN (or other computer system) to which a worker is connected via modems and telephone network, since no further use can be made of the telephone network for all the time that the worker is connected to the LAN and is therefore isolated. Hitherto, the only way of overcoming this has been for the homeworker to apply for a second telephone line. Although this is an acceptable solution for regular teleworkers, it is less acceptable for more occasional teleworkers.

### B. SUMMARY OF THE INVENTION

The invention is based on the insight that, where a telephone set can be connected at both ends to the type of modems mentioned in order to be able to exchange not only data but also speech via the same connection, a number of advantages can be achieved if the speech port of the modem can be connected to the telephone network Instead of to a telephone set. For this purpose, the invention provides means which make this possible. These will be discussed in greater detail below with reference to exemplary embodiments.

The invention is directed to an interface device as claimed in claim 1 and to a device as claimed in claim 2.

### C. EXEMPLARY EMBODIMENTS

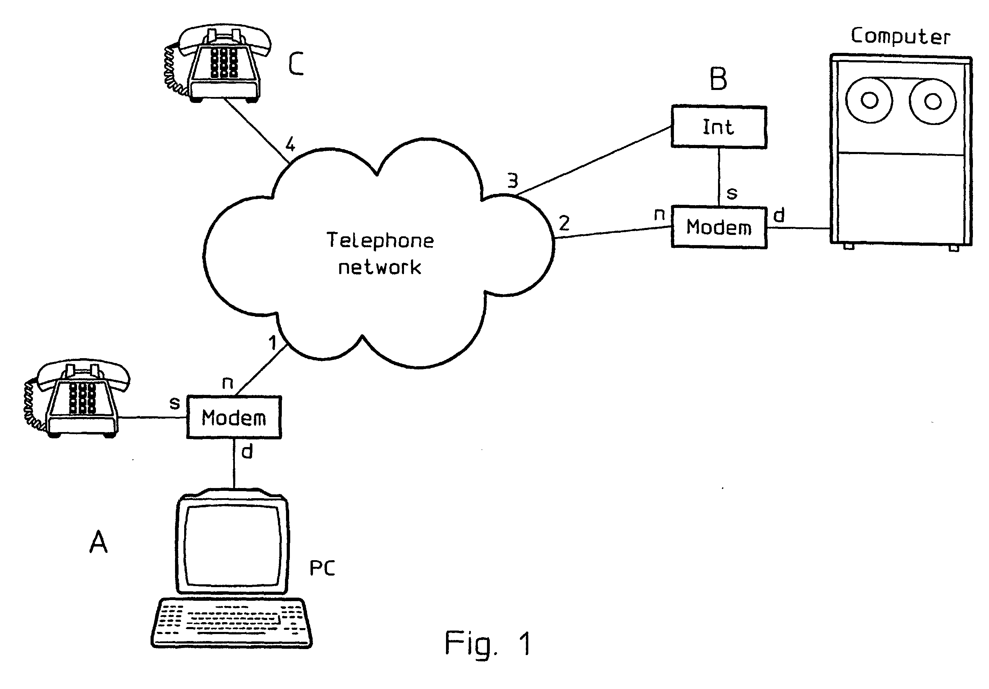

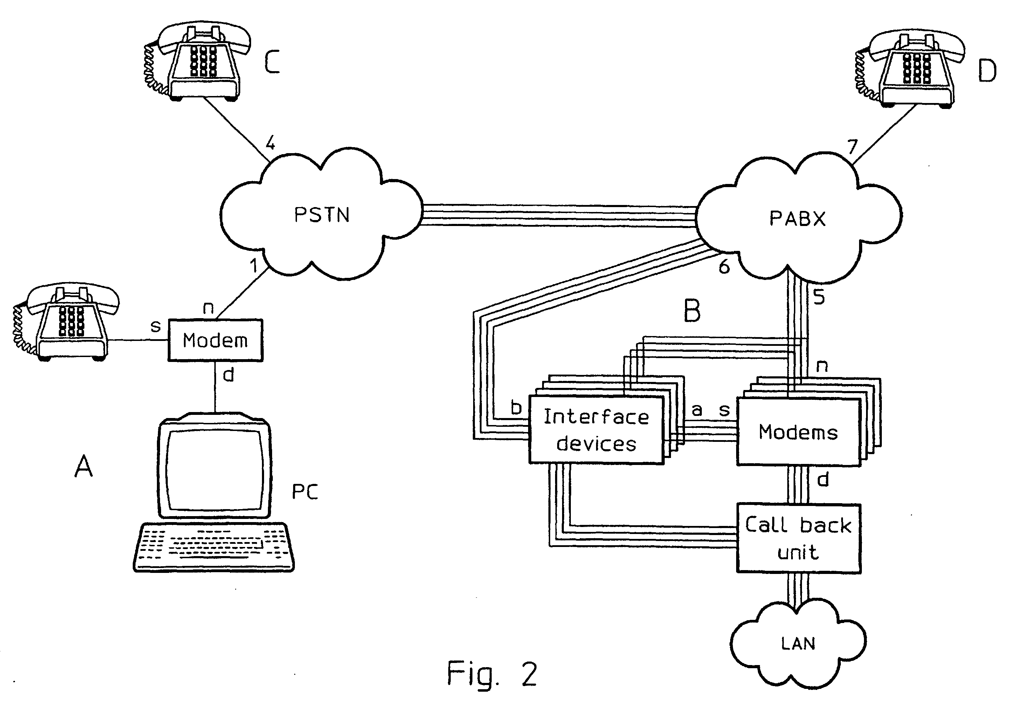

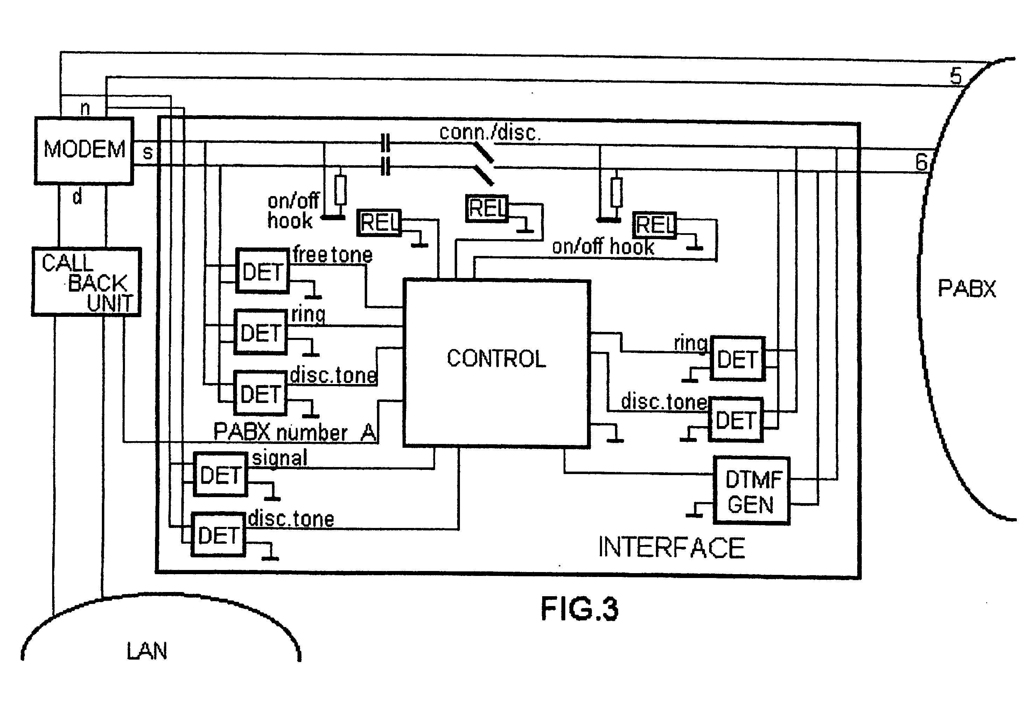

Figure 1 shows diagrammatically an application of the invention. Figure 2 shows diagrammatically a teleworking situation in which the modem system according to the invention is used. Figure 3 shows the diagram of an interface device.

Figure 1 shows a telephone network having ports 1, 2, 3 and 4. In the case of subscriber A, a teleworker, the network port (n) of a modem is connected to the network port 1 of the telephone network. A telephone set is connected to the modem via a speech port (s) and a PC via a data port (d). In the case of subscriber B, the network port of a modem is also connected to port 2 of the telephone network, which modem is connected to a computer system via a data port. The speech port of said modem is, however, not connected to a telephone set, as is usual and also advantageous In "person-to-person communication", for which purpose this type of modem has been developed, but via an interface device (INT) to another network port 3 of the telephone network. This achieves the result that subscriber A has access to the telephone network, namely via port 3.

The interface device (which is either part of the modem or accommodated between the speech port of the modem and the telephone network) ensures that an OFF-HOOK signal of subscriber A's telephone set also manifests Itself as OFF-HOOK signal on network port 3 of the telephone network, while a RING signal is presented as RING signal to subscriber A's set at port 3. If commercially available data/speech modems are now used in the case of A and B, the interface device at subscriber B's end must convert a RING signal (emitted by subscriber B's modem if subscriber A takes the receiver off the hook (and thereby generate an OFF-HOOK signal)) into an OFF-HOOK signal. The interface device must also convert a RING signal (originating from the telephone network) Into an OFF-HOOK signal which, after it has been presented to the speech port of subscriber B's modem, has the effect that subscriber A's modem emits a RING signal to his telephone set.

Not only can subscriber A now call other subscribers (via the speech port and network port of his modem, the connection between A and B, the network port and speech port of the modem at subscriber B's end, the interface device and the network port 3), but subscriber A can now also receive telephone calls, namely in the following way. In doing this, use is made of connecting facilities such as those which are nowadays possible in modern telephone networks and which are in fact referred to as "*-services" since they can be activated by numerical commands preceded by an "*" (and deactivated by numerical commands which are preceded by a "#"). Subscriber A can now make himself obtainable for other subscribers by switching the private number (port 1) through to the telephone number of port 3. Subscriber A activates said switching by keying in "*21 <telephone number port 3>" on his set. A subscriber C who calls subscriber A is therefore switched through to port 3, where a RING signal is produced which is conveyed to A's telephone set via the interface device and the modems. Of course, a condition for the ability to be able to switch through to port 3 is indeed that the telephone number of port 3 is known to A. In the practical example below, this will prove to be a problem for which a solution is, however, given.

Like Figure 1, Figure 2 shows a subscriber A with a telephone set, a modem and a PC, which is connected via a port 1 to the telephone network. The telephone network is indicated here by PSTN, the public telephone network. Connected to the PSTN is the PABX of the organization for which subscriber A works as teleworker. Subscriber A also has, in the office of the organization, a private port 7 on the PABX, to which a subscriber set D is connected. This plays a part in solving the problem indicated above.

In the organization there is a LAN to which computer systems and the like are connected. The LAN can be reached from the PABX by means of a duster of modems. Said modems are suitable for transmitting data via data ports d and speech via speech ports s. The speech ports are connected via interface devices to network ports 6 of the PABX.

The switching of calls to subscriber A to the network ports 6 suffers from a problem, namely that the telephone numbers of said network ports are not known to subscriber A:

In order to be able to receive telephone calls, teleworker A proceeds as follows:
- Subscriber A activates a logic switching from his network port 1 to the network port 7 of his "office set" D by keying in "*21 <telephone number port 7>" on his set; every call intended for him Is then routed (via the PSTN and PABX) to set D.
- The set D (port 7) has to be set to "follow-me" by keying in "*23". This can best be done beforehand by the teleworker himself; another possibility is that this can take place remotely via an identification procedure. The result of this action is that, provided activation is carried out from another network port, all calls are routed through to said other network port.
- After port 7 has been initialized for "follow-me" in this way, automatic switching to set A can be activated by keying in "*24 <telephone number port 7>" on set A. This activation proceeds via the "unknown" network port 6, as a result of which calls to set D are routed by the PABX to the "unknown" port 6 and from there, via the interface device, the modem connected thereto and subscriber A's modern, to the telephone set of subscriber A.

In this way, the result can be achieved, via a detour and by clever use of the switching facilities of the PSTN and the PABX, that subscriber A can both make a call and be called without the data connection between the modems having to be interrupted.

Figure 3 shows an exemplary embodiment of an interface device as shown In Figure 1 or 2. It is pointed out that, In practice, a teleworker who makes use of the LAN of his office, generally makes contact with the LAN via a 'call back unit'. In doing this, the telephone number of the modem duster Is dialled, and then, after an Identification procedure, the teleworker is called back by said call back unit In order then to be connected to the LAN via a modem from the modem cluster. In addition to a better protection of the LAN, this also achieves the result that the telephone charges of the teleworker (who is, after all, called back from the office) are charged to the office. Such a call back unit can be seen In Figures 2 and 3. Furthermore, a modem is shown which is suitable for simultaneous data transmission and speech transmission, and a PABX. Between the speech port s of the modem and the PABX there Is the interface device, whose operation Is explained in greater detail.

The Interface device serves to convert signals which are intended to operate a telephone set (the speech port of the modem is intended by the manufacturer to be connected with a telephone set) into signals which are suitable for "controlling" the PABX and are Intended therefor. The signals mentioned first comprise the ringing signal for activating the telephone bell in the event of a call and the disconnect signal which is delivered to the set after a connection has been interrupted. The signals which a telephone set can send to a PABX (or PSTN) comprise an "OFF-HOOK" signal or "ON-HOOK" signal to Indicate that a call has to be made or terminated, respectively, and DTMF (or pulse) dialling signals, with which a connection can be dialled or (in modern exchanges) settings can be made such as "switch through", "follow me", etc. The most important function of the interface device Is delivering an "OFF-HOOK" signal to the modem after a ringing signal has been received by the modem and delivering an "OFF-HOOK" signal to the PABX in order to request a connection from the PABX and then switch through both sides of the interface device. Conversely, the interface device also provides for the delivery of an "OFF-HOOK" signal to the PABX after a ringing signal has been received by the PABX and for delivering an "OFF-HOOK" signal to the modem in order to initiate a connection at the modem to the modem at the other end, and for subsequently switching through both sides of the Interface device. A number of detectors and relays serve to carry out said functions. The operation of the interface device is as follows:
1. A connection Is set up by subscriber A's modem to the modem at location B, as a result of which data can be exchanged. During the setting-up of the connection, use is made of the "call back unit" in the situation of Figure 2; said "call back unit" rings subscriber A back after first being dialled by subscriber A. In this way, the connection charges (via the PSTN) are charged to the organization which manages the PABX; in addition, the access protection to the LAN is better.
   Speech can be exchanged via the speech ports simultaneously with the exchange of data via the data ports of the modems. At subscriber A's end, a telephone set is connected to the speech port; at location B, the interface device.
2. If subscriber A lifts the receiver of his telephone set, said "OFF-HOOK" signal Is converted by the modems Into a ringing signal at the speech port of the modem at location B. In the interface device, the call detector ("RING") will respond to said ringing signal, and this is signalled to the microcontroller. The latter then requests connection to the PABX (or to the PSTN in Figure 1) by delivering an "OFF-HOOK" signal by opening the "on/OFF-HOOK" relay contact at the PABX end. The PABX will react thereto by delivering a dialling tone. The microcontroller then energizes the "connect/DISCONNECT" relay, as a result of which the contacts of said relay close and the subscriber set A is connected (via its modem, the PSTN, the modem at location B and the interface device which is now switched through) to the subscriber port 6 of the PABX. A dialling tone originating from the PABX is transmitted to subscriber set A, after which a connection can then be dialled with said set. If, as Figure 1 shows, the speech port of the Interface device is connected to the PSTN (port 3), a dialling tone will be received by subscriber A from the PSTN (namely, via port 3) after the interface device has been switched through. Since, in the situation of Figure 2, subscriber A, the teleworker, is switched through to the PABX, the latter can now dial connections as if subscriber A were connected directly to the PABX. The telephone charges (In the case of "external" calls to the PSTN subscribers) are also settled via the PABX, in other words the organization for which the teleworker works pays the call charges. Subscriber A now dials, for example, a connection to a PSTN subscriber C.
   The speech connection can be disconnected by subscriber A by an "ON-HOOK" signal; this is converted by the modems into a "DISCONNECT tone" which is detected by the "DISCONNECT tone" detector in the interface device at the modem end. The microcontroller then triggers the "connect/DISCONNECT" relay so that Its contacts break, and also the two "on/OFF-HOOK" relays, as a result of which the relay contacts close. The PABX signals an "ON-HOOK" signal and disconnects the connection to port 6. The disconnection of the connection on subscriber C's side is dealt with likewise: an "ON-HOOK" signal from subscriber C is transmitted by the PSTN and the PABX In the form of a "DISCONNECT tone" to port 6. The "DISCONNECT tone" detector of the interface device detects said "DISCONNECT tone", transmits it to the microcontroller and the latter triggers the "connect/DISCONNECT" relay so that its contacts break, and also the "on/OFF-HOOK" relays at the PABX end and of the modem so that their contacts close. The "ON-HOOK" signal is transmitted by the modems to subscriber A's set in the form of a "DISCONNECT tone", after which subscriber A replaces the receiver of his set.
3. If a subscriber C of the PSTN (or of the PABX) wishes to call subscriber A while subscriber A's port Is in use by his modem, this is possible as was explained above by means of using the switching facilities of the PABX (or, in the situation of Figure 1, of the PSTN). To put it briefly, C calls D, but the PABX routes that call through to network port 6. If a cluster of modems is used, the problem arises that port 6 comprises, in fact, a cluster of ports (unknown to users). For that reason, set D, i.e. port 7, is initialized for "follow me" switching ("*23") which has to be activated by subscriber A ("*24 <subscriber number D>"). That activation may be carried out, if desired, automatically at the beginning of a teleworking session under the control of subscriber A's PC software. If a simple modern is used in the case of B and if the connection number of said modem to the PABX (or PSTN) is known, switching is effected by the direct switching facility by "*21 <connection number of B>".
   The operation of the interface device in the event of a call from the PABX (or the PSTN) is mutatis mutandis identical to the operation in the event of a call from subscriber A's end.
   A call from the PABX manifests itself by a ringing signal from port 6, by which the Interface device is connected to the PABX. In this case, it is unimportant whether the call to subscriber A is the consequence of a preceding activation of "follow me" switching or of direct switching. After the ringing signal has been detected, the microcontroller initiates a call to subscriber A's modem via the modem at location B. For this purpose, as a result of energizing the "on/OFF-HOOK" relay at that end, an "OFF-HOOK" signal Is generated which is converted by the modems at B and A (it is unimportant in which modem that actually takes place) into a ringing signal to A's telephone set. As long as a ringing signal is transmitted to location A, the modems transmit a free tone to location B which stops as soon as subscriber A lifts the receiver. The free tone Is detected at B in the interface device by a free-tone detector. As soon as the free tone stops, the microcontroller energizes the "on/OFF-HOOK" relay at the PABX end ("OFF-HOOK"). Provision is also made for the through connection of both ends of the interface device by causing the "connect/DISCONNECT" contacts to dose. After these operations, A's set Is connected "transparently" to the PABX. The connection between subscriber C and subscriber A Is terminated again in the same way as was indicated above.
4. In order to prevent that the settings ("connect" and "OFF-HOOK" to both sides) for the transmission of a speech connection continue to exist while the connection between the network ports (n) of the modems is disconnected, for example, by one of the two modems, said connection must always be monitored. This is done by a signal detector which activates the microcontroller In order to "reset" the interface device as soon as a signal is no longer detected. If the connection from the PABX or the PSTN is disconnected, this is noticed by detecting a "DISCONNECT" tone at the network port (n) of the modem B. As soon as one of said detectors detects the loss of the connection, the interface device is reset (both sides "ON-HOOK" and "DISCONNECTed").
5. If use is made of a "call back unit" as in Figure 3, it Is easily possible to activate automatically a set (D) initialized for "follow me" from the interface device. Normally, the telephone numbers which are authorized for access to the downstream LAN are stored in a "call back unit". When subscriber A calls the "call back unit", he must key in his telephone number (if possible, use can be made of "calling number identification") and/or an ID number, after which subscriber A, if he has access authorization, is called back by the "call back unit". It Is simple to add to the list of authorized telephone numbers and/or ID numbers a field containing PABX numbers at which the various employees can normally be reached. At the start of a teleworking session, subscriber A thus makes a connection to the LAN via the "call back unit" and the modem duster, after which the microcontroller can send a message in the form of "*24 <PABX telephone number subscriber D (= subscriber A)>" to the PABX using the PABX telephone number (D) to be received from the "call back unit", as a result of which the PABX is activated in order to switch through any telephone call to the telephone number (D) of teleworker A to the PABX port 6, as a result of which the interface device is connected to the PABX. The sending of the message "*24 <PABX telephone number subscriber D>" is carried out by a DTMF generator in the interface device under the control of the microcontroller after connection has been made to the PABX.
   The function of the interface device is reproduced below in the form of a number of statements with which the microcontroller could be programmed; (M) refers to the modem end, (P) to the PABX end:
   LABEL CALL-FROM-MODEM
   ON RING(M) THEN OFF-HOOK(P): OFF-HOOK(M): CONNECT(M,P) ON DISCONNECT(M) THEN ON-HOOK(P): DISCONNECT(M,P): ON-HOOK(M)
   LABEL CALL-FROM-PABX
   ON RING(P) THEN OFF-HOOK(M): OFF-HOOK(P): CONNECT(M,P) ON DISCONNECT(P) THEN ON-HOOK(M): DISCONNECT(M,P): ON-HOOK(P)
   The Interface device in fact comprises two conversion devices which operate in antlparallel, it being possible to specify the operation of each one by the instructions (x and y indicate input or output, respectively, of the conversion device):
   ON RING(x) THEN OFF-HOOK(y): OFF-HOOK(x): CONNECT(x,y) ON DISCONNECT(y) THEN ON-HOOK(x): DISCONNECT(x,y): ON-HOOK(y)

   The signals which have to be converted by each conversion device are:
   RING(x)^{→} _{←}off-HOOK(x) - {connect(x,y)} - OFF-HOOK(y)^{→} DISCONNECT(x)^{→} _{←} on-HOOK(x) - {DISCONNECT(x,y)} - ON-HOOK(y)^{→}
   In the above, the signals to be converted are indicated in capitals, the response signals thereto in small letters and the connect/DISCONNECT action between brace brackets.
   Finally, it is furthermore pointed out that the use was assumed above of modems whose speech port is not suitable for connection to the telephone network, for which reason provision was made for the use of an interface device. Of course, it is more attractive per se, at least for the location B, to make use, both in Figure 1 and in Figure 2, of modems whose speech ports can in fact be connected directly to the telephone network. The signalling which is now exchanged between the speech ports of the modems can be represented by:
   - from location A to location B:
      →OFF-HOOK(location A)...(Modems)...RING(location B)→
      →ON-HOOK(location A)...(Modems)...DISCONNECT(location B)→
   - conversion by the interface device at location B:
      →RING(location B).....(Interface device)....→OFF-HOOK(location B)→
      →DISCONNECT(location B)..(Interface device).....→ON-HOOK(location B)→.
   - Likewise from location B to location A:
      →RING(location B).....(Interface device)....OFF-HOOK(location B)→
      →DISCONNECT(location B)..(Interface device).....ON-HOOK(location B)→
      OFF-HOOK(location B)→....(Modems)...→RING(location A)
      ON-HOOK(location B)→....(Modems)...→ DISCONNECT(location A)
   A modem system whose speech port of the modem at location A can be connected to a telephone set and the modem at location B (directly) to the PSTN or a PABX, can be represented by:
   - from location A to location B:
      →OFF-HOOK(location A)...(Modems)...OFF-HOOK(location B)→
      →ON-HOOK(location A)....(Modems)....ON-HOOK(location B)→
   - and from location B to location A:
      →RING(location B)....(Modems)...→RING(location A)
      →DISCONNECT(location B)....(Modems)...→DISCONNECT(location A)
   The above reveals the simplicity of modems suitable for this purpose, namely modems which (at both locations) transmit the signalling (OFF-HOOK, ON-HOOK, RING or DISCONNECT) presented to the speech ports unaltered and transparently to the other location. However, the simplicity of the above representation is somewhat deceptive since the signals mentioned, like the speech to be exchanged, have to be digitized and coded before being able to be transmitted, together with the (digital) data via the telephone network.

### D. REFERENCES

1. Eglowstein H, Almost as good as being there, BYTE (USA), vol.19, no.4, PP.173-4, 176, April 1994
2. AT&T Corp, EP0674420-A1, Independently switched voice and data calls using a simultaneous voice and data modem, issue date 09/27/1995, filing date 03/16/1995, priority date 03/23/1994.
3. AT&T Corp. EP0676886-A3, Simultaneous voice and data call establishment using a simultaneous voice and data modem pool and private branch exchange facilities, Issue date 07/30/1997, filing date 03/29/1995, priority date 04/08/1994.

## Claims

1. Interface device, to be connected between, at one side, the speech port (s) of a modem which is suitable for simultaneous transmission of data signals via the modem's data port (d) and speech signals via the modem's speech port (s) to and from a first subscriber port (2) of a telephone network via the modem's network port (n) and, at the other side, a second subscriber port (3) of said telephone network, the interface device comprising
two conversion devices fit to operate antiparallel and both being enabled for conversion of first control signals fit for signalling from the telephone network to a telephone set, into second control signals fit for signalling from a telephone set to the telephone network,
a through-connection device fit for connecting through the modem's speech port (s) with the telephone network, and
a control device fit to control said conversion devices and said through-connection device based on said first control signals received from either side of the interface device.

2. Device, comprising a modem which is suitable for simultaneous transmission of data signals via the modem's data port (d) and speech signals via the modem's speech port (s) to and from a first subscriber port (2) of a telephone-network via the modem's network port (n), the device further comprising an interface device according to claim 1, to be connected between a second subscriber port (3) of the telephone network and the modem's speech port (s).

## Patentansprüche

1. Schnittstellenvorrichtung, die zwischen, auf der einen Seite, dem Sprachenanschluss (s) eines Modems, welches für die gleichzeitige Übertragung von Datensignalen über den Datenanschluss (d) des Modems und Sprachsignalen über den Sprachanschluss (s) des Modems von und zu einem Teilnehmeranschluss (2) eines Telefonnetzwerkes über den Netzwerkanschluss (n) des Modems geeignet ist, und, auf der anderen Seite, einem zweiten Teilnehmeranschluss (3) des besagten Telefonnetzwerkes zu verbinden ist, wobei die Schnittstellenvorrichtung umfasst:
- zwei Wandlereinrichtungen, die befähigt sind, anti-parallel zu arbeiten und die beide geeignet sind, um erste Steuersignale, die für die Signalisierung vom Telefonnetzwerk in ein Telefongerät geeignet sind, in zweite Steuersignale zu wandeln, die für die Signalisierung von einem Telefongerät in das Telefonnetzwerk geeignet sind,
- eine Einrichtung zur Durchverbindung, die geeignet ist, um den Sprachanschluss (s) des Modems mit dem Telefonnetzwerk durchzuverbinden, und
- eine Steuereinrichtung, die geeignet ist, um die besagten Wandlereinrichtungen und die besagte Einrichtung zur Durchverbindung basierend auf den besagten ersten Steuersignalen, die von irgendeiner Seite der Schnittstellenvorrichtung empfangen werden, zu steuern.

2. Vorrichtung mit einem Modem, welches geeignet ist für die gleichzeitige Übertragung von Datensignalen über den Datenanschluss (d) des Modems und von Sprachsignalen über den Sprachanschluss (s) des Modems zu und von einem ersten Teilnehmeranschluss (2) eines Telefonnetzwerkes über den Netzwerkanschluss (n) des Modems, wobei die Vorrichtung weiterhin eine Schnittstellenvorrichtung gemäss Anspruch 1 umfasst, welche zwischen einem zweiten Teilnehmeranschluss (3) des Telefonnetzwerkes und dem Sprachanschluss (s) des Modems zu verbinden ist.

## Revendications

1. Dispositif d'interface, destiné à être connecté entre, d'une part, le port (s) de signaux vocaux d'un modem, qui est approprié pour réaliser l'émission simultanée de signaux de données par l'intermédiaire du port (d) de données du modem et de signaux vocaux par l'intermédiaire du port (s) de signaux vocaux du modem, en direction et en provenance d'un premier port d'abonné (2) d'un réseau téléphonique par l'intermédiaire du port (n) du réseau du modem, et d'autre part, un second port d'abonné (3) dudit réseau téléphonique, le dispositif d'interface comprenant
deux dispositifs de conversion montés de manière à fonctionner d'une manière antiparallèle et autorisés tous deux à réaliser la conversion de premiers signaux de commande prévus pour une signalisation depuis le réseau téléphonique à un poste téléphonique, en des seconds signaux de commande prévus pour une signalisation depuis un appareil téléphonique au réseau téléphonique,
un dispositif de connexion directe monté de manière à réaliser une connexion par l'intermédiaire du port (s) de signaux vocaux du modem avec le réseau téléphonique, et
un dispositif de commande monté de manière à commander lesdits dispositifs de conversion et ledit dispositif de connexion directe sur la base desdits premiers signaux de commande reçus de la part d'un côté ou de l'autre du dispositif d'interface.

2. Dispositif comprenant un modem qui convient pour la transmission simultanée de signaux de données par l'intermédiaire du port (d) de données du modem et de signaux vocaux par l'intermédiaire du port (s) de signaux vocaux du modem en direction et en provenance d'un premier port d'abonné (2) d'un réseau téléphonique par l'intermédiaire du port (n) du réseau du modem, le dispositif comprenant en outre un dispositif d'interface selon la revendication 1, destiné à être connecté entre un second port d'abonné (3) du réseau téléphonique et le port (s) de signaux vocaux du modem.
